# EUROPÄISCHE PATENTSCHRIFT

(11) **EP 1 544 074 B1**
(45) Veröffentlichungstag und Bekanntmachung des Hinweises auf die Patenterteilung: **02.11.2006**
(21) Anmeldenummer: 04016520.1
(22) Anmeldetag: 14.07.2004
(51) Int. Cl.: B61L 15/02, B61D 29/00, F21S 8/10

(54) **Signal- und Fahrlichtscheinwerfer für ein Schienenfahrzeug.**
Headlamp and signaling lights for a railway vehicle.
Phare et feu de signalisation pour véhicule ferroviaire.

(30) Priorität: 17.12.2003 EP 03028904
(43) Veröffentlichungstag der Anmeldung: 22.06.2005
(73) Patentinhaber: Pintsch Bamag Antriebs- und Verkehrstechnik GmbH, 46537 Dinslaken (DE)
(72) Erfinder: Krause, Werner, 46535 Dinslaken (DE)
(74) Vertreter: Patentanwälte Ruff, Wilhelm, Beier, Dauster & Partner

(56) Entgegenhaltungen:
- EP-A- 1 255 132
- EP-A- 1 270 324
- DE-A1- 19 815 868
- DE-U1- 20 316 143

## Beschreibung

Die Erfindung betrifft einen Signal- und Fahrlichtscheinwerfer für Schienenfahrzeuge, mit einem ersten, als lichtemittierende Diode ausgebildeten Leuchtmittel zum Abstrahlen von Licht mit einer ersten Lichtstärke in erste Hauptabstrahlrichtung, und wenigstens einem zweiten, als lichtemittierende Diode ausgebildeten Leuchtmittel zum Abstrahlen von Licht in eine zweite Hauptabstrahlrichtung, wobei die zweite Lichtstärke geringer ist als die erste Lichtstärke und die zweite Hauptabstrahlrichtung von der ersten Hauptabstrahlrichtung verschieden ist und wobei mit dem wenigstens einen zweiten Leuchtmittel wenigstens ein Abschnitt einer gleichmäßig erleuchteten Signalscheibe erzeugt werden soll.

Aus der europäischen Offenlegungsschrift EP 1195311 A1 ist eine Signalleuchte für ein Schienenfahrzeug bekannt. Die Signalleuchte weist als Leuchtmittel mehrere Leuchtdioden auf. In der Signalleuchte können Leuchtdioden für verschiedene Farben vorhanden sein. Die Leuchtdioden können um eine Aussparung für einen Scheinwerfer herum angeordnet sein. Der in der Aussparung angeordnete Scheinwerfer kann zum Beispiel ein Linsenscheinwerfer mit einer Halogenglühlampe sein. Dadurch können der Scheinwerfer für Abblendlicht und die Signalleuchte räumlich kombiniert werden.

Aus der deutschen Offenlegungsschrift DE 19 815 868 A1 ist ebenfalls ein räumlich kombinierter Scheinwerfer bekannt. Bei dieser Lösung werden nur LED's eingesetzt.

Aus dem amerikanischen Patent US 4,654,629 ist eine Signalleuchte für Schienenfahrzeuge bekannt, die mehrere lichtemittierende Dioden aufweist und bei der Linsen vorgesehen sind, um einen Lichtstrahl mit der gewünschten Abstrahlcharakteristik zu erreichen. Die Linsen können als Fresnellinsen ausgebildet sein. Zu Erzielung einer gewünschten Abstrahlrichtung können die lichtemittierenden Dioden zu einer gewünschten Abstrahlrichtung geneigt angeordnet sein.

Aus dem deutschen Gebrauchsmuster DE 29612300 U1 sind Signalleuchten für schienengebundene Fahrzeuge bekannt, die als Leuchtmittel lichtemittierende Dioden aufweisen. Die lichtemittierenden Dioden werden auf einer Leiterplatte montiert und bilden einen Leuchtkreis. Abhängig vom Einsatzort als Spitzenlicht oder Schlusslicht können weiße, gelbe bzw. rote lichtemittierende Dioden eingesetzt werden.

Aus dem deutschen Gebrauchsmuster DE 20012815 U1 ist eine Zugschlussleuchte mit LED-Einsatz bekannt, bei der rote und weiße LED's zentrisch hinter einer roten Abdeckscheibe angeordnet sind. Die LED's sind in einem Einsatz angeordnet, der anstelle konventioneller Leuchtmittel in einer Zugschlussleuchte nachgerüstet werden kann.

Mit der Erfindung soll ein Scheinwerfer, insbesondere ein kombinierter Signal- und Fahrlichtscheinwerfer für Schienenfahrzeuge, geschaffen werden, der einerseits Fahrlicht mit hoher Lichtstärke bereitstellen kann und andererseits als Signallicht auch eine gleichmäßig erleuchtete Signalscheibe bereitstellen kann.

Erfindungsgemäß ist hierzu ein kombinierter Signal- und Fahrlichtscheinwerfer für Schienenfahrzeuge, mit einem ersten, als lichtemittierende Diode ausgebildeten Leuchtmittel zum Abstrahlen von Licht mit einer ersten Lichtstärke in eine erste Hauptabstrahlrichtung, und wenigstens einem zweiten, als lichtemittierende Diode ausgebildeten Leuchtmittel zum Abstrahlen von Licht in eine zweite Hauptabstrahlrichtung, wobei die zweite Lichtstärke geringer ist als die erste Lichtstärke und die zweite Hauptabstrahlrichtung von der ersten Hauptabstrahlrichtung verschieden ist und wobei mit dem wenigstens einen zweiten Leuchtmittel wenigstens ein Abschnitt einer gleichmäßig erleuchteten Signalscheibe erzeugt werden soll, vorgesehen, bei dem wenigstens eines der zweiten Leuchtmittel als sogenannte side-emitting-LED ausgebildet ist, die Licht in einem Winkelbereich +/- 110° zu einer Mittelachse der side-emitting-LED abgibt, und bei dem Reflexions- und Streumittel vorgesehen sind, um das von der side-emitting-LED abgegebene Licht im Wesentlichen in die zweite Hauptabstrahlrichtung zu leiten.

Die Verwendung einer side-emitting-LED in Verbindung mit geeigneten Reflexions- und Streumitteln ermöglichen es, auch in dem Bereich, in dem die erste LED für das Fahrlicht angeordnet ist, im Signallichtbetrieb einen gleichmäßig erleuchteten Abschnitt einer Signalscheibe bereitzustellen. Bei bekannten kombinierten Signal- und Fahrlichtscheinwerfern ist zwar bekannt, eine Halogenglühlampe für das Fahrlicht mit hoher Lichtstärke mit lichtemittierenden Dioden für den Signallichtbetrieb zu umgeben, im Signallichtbetrieb oder bei kombinierten Signal- und Fahrlichtbetrieb ist dann aber stets ein dunkles Loch in der Signalscheibe zu beobachten, da das erste Leuchtmittel kein oder nur ungenügend Licht in die zweite Hauptstrahlabrichtung abgibt, um die Signalscheibe gleichmäßig erleuchten zu können. In den Fahrlichtbereich kann dabei nicht ohne weiteres ein weiteres Leuchtmittel für den Signallichtbetrieb eingesetzt werden, da dieses sonst im Fahrlichtbetrieb eine Abschattung hervorrufen würde. Durch den Einsatz einer side-emitting-LED gelingt es nun, Licht in diesen Bereich des ersten Leuchtmittels für den Fahrlichtbetrieb einzukoppeln und in Verbindung mit geeigneten Reflexions- und Streumitteln in der zweiten Hauptabstrahlrichtung abzugeben, ohne dass eine Abschattung im Fahrlichtbetrieb zu befürchten wäre. Dies ist auch deshalb der Fall, da side-emitting-LED's in Richtung ihrer Mittelachse extrem flach aufgebaut sind, so dass sie auch bei Anordnung im Bereich des ersten Leuchtmittels für den Fahrlichtbetrieb keine oder nur eine unwesentliche Beeinträchtigung des Fahrlichtstrahlengangs verursachen.

In Weiterbildung der Erfindung sind die Reflexions- und Streumittel als parabolartiger Reflektor ausgebildet.

Ein solcher parabolartiger Reflektor kann beispielsweise facettiert ausgebildet sein, um das von der side-emitting-LED abgegebene Licht in einem weiten Bereich zu streuen. Bei entsprechender Gestaltung des parabolartigen Reflektors kann aber auch eine durchgehende, verspiegelte Oberfläche gewählt werden.

In Weiterbildung der Erfindung weisen die Reflexions- und Streumittel wenigstens abschnittsweise eine strukturierte Oberfläche zum Erzeugen einer diffusen Reflexion auf.

Auf diese Weise gelingt es, das von der side-emitting-LED abgegebene Licht im Wesentlichen über den gesamten Bereich der Signalscheibe, in dem das Fahrlicht des ersten Leuchtmittels austritt, austreten zu lassen, so dass im Signallichtbetrieb eine gleichmäßig erleuchtete Signalscheibe erzeugt wird. Die Kombination einer side-emitting-LED in Verbindung mit Reflexions- und Streumitteln zum Erzeugen einer diffusen Reflexion ermöglicht es dabei überraschenderweise auch den Bereich der Signalscheibe, der für den Austritt des Fahrlichts vorgesehen ist, im Signallichtbetrieb sehr gleichmäßig zu erleuchten ohne im Fahrlichtbetrieb das erste Leuchtmittel nennenswert abzuschatten. Ein geeigneter Reflektor kann beispielsweise eine zunächst sandgestrahlte und dann verspiegelte Oberfläche aufweisen, um eine strukturierte Oberfläche zu schaffen, an der das Licht diffus reflektiert wird. Die Formgebung des Reflektors kann parabolartig sein und speziell kann ein Parabolreflektor eingesetzt werden. Die diffuse Reflexion des von der side-emitting-LED abgegebenen Lichts ist dabei hilfreich, um den Eindruck einer gleichmäßig erleuchteten Signalscheibe aus verschiedenen Betrachtungsrichtungen zu gewährleisteten.

In Weiterbildung der Erfindung ist das erste Leuchtmittel im Brennpunkt einer Vorsatzlinse angeordnet und die Reflexions- und Streumittel leiten das von dem wenigstens einen zweiten Leuchtmittel abgegebene Licht auf die Vorsatzlinse.

Eine solche Vorsatzlinse wird verwendet, um das vom ersten Leuchtmittel abgegebene Fahrlicht in einen definierten Bereich zu bündeln. Eine solche Vorsatzlinse erschwert aber die Erzeugung einer gleichmäßigen Signalscheibe erheblich, da auch die side-emitting-LED benachbart zum ersten Leuchtmittel angeordnet werden muss, um deren Abschattung zu verhindern. Durch Bereitstellung diffus reflektierender Reflexions- und Streumittel, speziell eines Parabolreflektors mit diffus reflektierender Oberfläche, gelingt es dabei, das Licht von der side-emitting-LED so zu verteilen, dass es von der Vorsatzlinse nicht mehr vollständig fokussiert werden kann. Dadurch kann auch aus verschiedenen Betrachtungsrichtungen eine gleichmäßig erleuchtete Signalscheibe erzeugt werden.

In Weiterbildung der Erfindung ist das zweite Leuchtmittel im Abstand des Brennpunkts zu der Vorsatzlinse oder auf Höhe des Brennpunkts aber seitlich versetzt zum Brennpunkt angeordnet.

Durch diese Anordnung des zweiten Leuchtmittels lässt sich bei verschwindend geringer Abschattung der Fahrlichtabstrahlung ein gleichmäßig erleuchteter Abschnitt der Signalscheibe bereitstellen.

In Weiterbildung der Erfindung ist die Vorsatzlinse wenigstens abschnittsweise von weiteren lichtemittierenden Dioden umgeben.

Durch diese Maßnahme lässt sich auf einfache Weise der den Fahrlichtabstrahlbereich umgebende Abschnitt der erleuchteten Signalscheibe erzeugen. Da mehrere lichtemittierende Dioden vorgesehen sind, wird eine extrem hohe Ausfallsicherheit erreicht.

In Weiterbildung der Erfindung sind bei Signallicht- oder Fahrlichtbetrieb mit weißem Licht zusätzlich rotes Licht, grünes Licht und/oder gelbes Licht emittierende Dioden eingeschaltet.

Beispielsweise können im Signallichtbetrieb oder Fahrlichtbetrieb mit weißem Licht speziell rote Spektralanteile zugemischt werden, durch die sich die Erkennbarkeit von Retoreflexsignalen verbessern lässt. Allgemein kann der Farbort des abgestrahlten Lichts verändert und auf spezielle Anforderungen abgestimmt werden. Die zusätzlich rotes, gelbes und/oder grünes Licht emittierenden Dioden können dabei sowohl in einem eine Vorsatzlinse für das Fahrlicht umgebenden Bereich als auch vor der Vorsatzlinse, das bedeutet bei der side-emitting-LED, angeordnet sein.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine seitliche Schnittansicht eines erfindungsgemäßen Scheinwerfers gemäß einer bevorzugten Ausführungsform,
- Fig. 2: eine perspektivische Ansicht eines in dem Scheinwerfer der Fig. 1 verwendeten Reflektors,
- Fig. 3: eine Verteilung der Lichtstärke einer als side-emitting-LED ausgebildeten Leuchtdiode des Scheinwerfers der Fig. 1 und
- Fig. 4: eine Spektralverteilung des von den Leuchtdioden des Scheinwerfers der Fig. 1 abgegebenen Lichts.

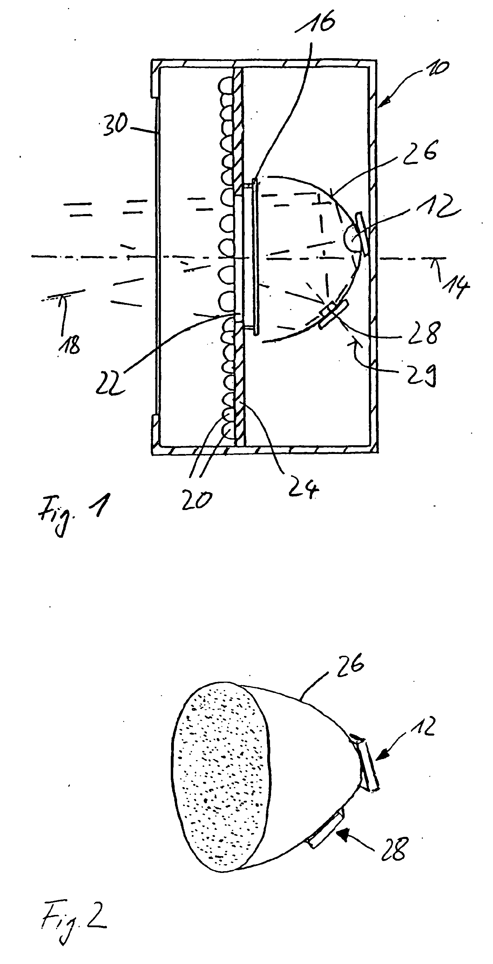

Eine bevorzugte Ausführungsform des erfindungsgemäßen Scheinwerfers, ein Signal- und Fahrlichtscheinwerfer für Schienenfahrzeuge, ist schematisch in der seitlichen Schnittansicht der Fig. 1 dargestellt. Innerhalb eines Scheinwerfergehäuses 10 ist eine weiße Hochleistungs-LED 12 angeordnet, die mit einem Kühlkörper versehen ist und gegenüber einer Mittelachse 14 des Scheinwerfers nach oben versetzt ist. Es ist dabei festzustellen, dass das Scheinwerfergehäuse 10 allseitig geschlossen und beispielsweise abgedichtet ausgeführt ist. Die weiße Hochleistungs-LED 12 einschließlich ihres Kühlkörpers ist dabei im Inneren des abgeschlossenen Scheinwerfergehäuses 10 angeordnet. Trotz der vergleichsweise hohen Wärmeempfindlichkeit von lichtemittierenden Dioden ist dies aufgrund der gegenüber beispielsweise Halogenglühleuchten geringen Wärmeentwicklung von LED's möglich und führt zu einer konstruktiv einfachen Ausgestaltung des Scheinwerfergehäuses 10. Die weiße Hochleistungs-LED 12 wirkt mit einer Sekundäroptik zusammen, die als Vorsatzlinse 16 ausgebildet ist. Zusammen mit der gewählten Anordnung der weißen Hochleistungs-LED 12 und der Vorsatzlinse 16 ergibt sich eine nach unten gerichtete Hauptabstrahlrichtung 18 der Hochleistungs-LED 12, die als Fahrlicht verwendet wird. Mehrere zweite lichtemittierende Dioden 20 sind eine zentrale Ausnehmung 22 einer Leiterplatte 24 umgebend auf einer Vorderseite der Leiterplatte 24 angeordnet und werden im Signallichtbetrieb eingesetzt. Die weiße Hochleistungs-LED 12 ist von einer Rückseite der Leiterplatte 24 beabstandet an einer Rückwand des Scheinwerfergehäuses 10 angeordnet. Die Leiterplatte 24 ist ebenfalls innerhalb des Scheinwerfergehäuses 10 angeordnet. Aufgrund des Abstandes, den die weiße Hochleistungs-LED 12 von der zentralen Öffnung 22 in der Leiterplatte einnimmt und aufgrund des relativ breiten Abstrahlwinkels der weißen Hochleistungs-LED 12 würde ein Anteil des von der Hochleistungs-LED 12 abgegebenen Lichts nicht durch die Vorsatzlinse 16 und die zentrale Öffnung 22 der Leiterplatte 24 gehen, sondern Abschnitte der Rückseite der Leiterplatte 24 beleuchten, die die zentrale Öffnung 22 umgeben. Dieser Anteil des Lichts wäre damit für die Nutzung als Fahrlicht im Wesentlichen verloren. Die weiße Hochleistungs-LED 12 ist daher innerhalb eines Reflektors 26 angeordnet, der dafür sorgt, dass im Wesentlichen alles Licht, das von der weißen Hochleistungs-LED 12 abgegeben wird, auf die Vorsatzlinse 16 gerichtet wird.

Innerhalb des Reflektors 26 ist eine weitere lichtemittierende Diode 28 vorgesehen. Die lichtemittierende Diode 28 ist innerhalb des Reflektors 26 aber versetzt zur Hochleistungs-LED 12 angeordnet. Die LED 28, die ebenfalls weißes Licht abgibt, ist so innerhalb des Reflektors 26 angeordnet und der Reflektor 26 ist so ausgebildet, dass von ihr abgegebenes Licht nach Passieren der Vorsatzlinse 16 hauptsächlich parallel zur Mittelachse 14 austritt. Die weitere LED 28 sorgt damit verlässlich dafür, dass im Signallichtbetrieb im Bereich der zentralen Ausnehmung 22 der Leiterplatte 24 auch bei Betrachtung aus wechselnden Betrachtungswinkeln kein dunkler Bereich entsteht, sondern eine gleichmäßig ausgeleuchtete Signalscheibe geschaffen ist.

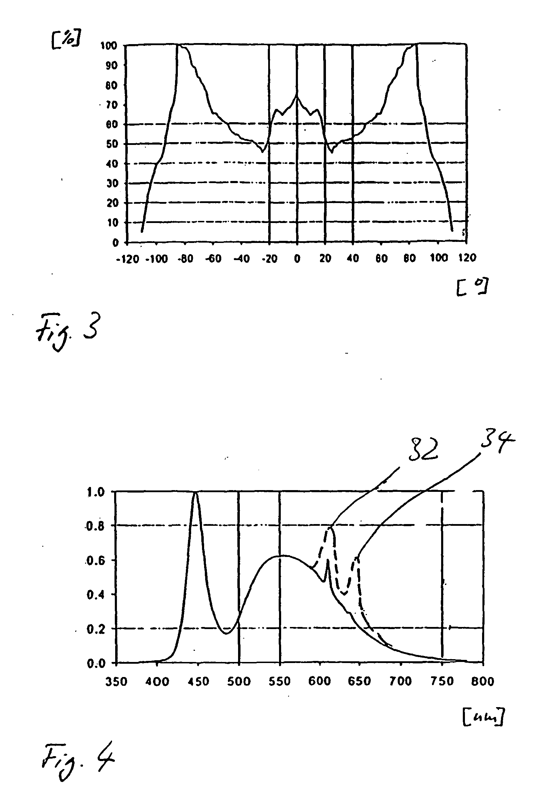

Wie in der Darstellung der Fig. 1 zu erkennen ist, ist die weitere LED 28 extrem flach ausgebildet und als sogenannte side-emitting-LED aufgebaut. Solche sogenannten side-emitting-LED's geben Licht über einen sehr großen Winkelbereich ab und eine beispielhafte Lichtstärkeverteilung der side-emitting-LED 28 in Prozent über dem Raumwinkel ist in dem Diagramm der Fig. 3 dargestellt. Es ist in der Fig. 3 zu erkennen, dass die LED 28 trotz ihrer sehr flachen Bauweise Licht in einem Winkel von +/- 110° abgibt. Dadurch kann im Signallichtbetrieb dafür gesorgt werden, dass die Vorsatzlinse 16 gleichmäßig und unter verschiedenen Winkeln ausgeleuchtet und somit eine gleichmäßig erleuchtete Signalscheibe erzeugt ist. Aufgrund ihrer extrem flachen Bauweise stört die side-emitting-LED 28 jedoch den Strahlengang der Hochleistungs-LED 12 nicht oder lediglich unwesentlich, so dass keine Abschattungen des Fahrlichts auftreten. Anstelle einer einzigen weiteren LED 28 können auch mehrere side-emitting-LED's im Reflektor 26 angeordnet werden, solang diese die Abstrahlung des Fahrlichts durch die weiße Hochleistungs-LED 12 nicht oder lediglich unwesentlich stören. Bei der in der Fig. 1 dargestellten bevorzugten Ausführungsform ist die side-emitting-LED 28 gegenüber der Mittelachse 14 nach unten versetzt und in Abstrahlrichtung gegenüber der weißen Hochleistungs-LED 12 nach vorne versetzt auf der Innenwandung des Reflektors 26 angeordnet. Ein Kühlkörper der weiteren LED 28 ist auf einer Rückseite des Reflektors 26 platziert.

Die perspektivische Ansicht der Fig. 2 zeigt den Reflektor 26 der Fig. 1, wobei in der perspektivischen Ansicht der Fig. 2 von der weißen Hochleistungs-LED 12 und der side-emitting-LED 28 lediglich der jeweils zugeordnete und auf der Außenseite des Reflektors 26 angeordnete Kühlkörper zu erkennen ist. Der Reflektor 26 weist auf seiner Innenseite eine strukturierte Oberfläche auf, die beispielsweise dadurch entsteht, dass der Reflektor 26 auf seiner Innenseite vor dem Verspiegeln sandgestrahlt wird. Dadurch kann erreicht werden, dass Licht beim Auftreffen auf die Innenseite des Reflektors 26 diffus reflektiert wird. Das von der side-emitting-LED 28 ausgehende Licht wird dadurch vom Reflektor 26 diffus reflektiert und tritt infolge dessen aus verschiedensten Richtungen kommend auf die Vorsatzlinse 16 auf. Die Vorsatzlinse 16 kann dadurch das von der side-emitting-LED 28 ausgehende Licht nicht oder wenigstens nicht mehr vollständig in die erste Hauptabstrahlrichtung 18 fokussieren. Vielmehr wird wenigstens ein erheblicher Anteil des von der side-emitting-LED 28 ausgehenden Lichts in von der ersten Hauptabstrahlrichtung 18 verschiedenen Richtungen durch die Vorsatzlinse 16 hindurchtreten. Dadurch kann sichergestellt werden, dass bei eingeschalteter side-emitting-LED 28 der Bereich der zentralen Ausnehmung 22 in der Leiterplatt 24 auch aus verschiedenen Betrachtungsrichtungen als gleichmäßig erleuchtet erscheint. Zusammen mit den weiteren LED's 20 auf der Vorderseite der Leiterplatte 24, die die zentrale Ausnehmung 22 ringförmig umgeben, kann dadurch eine gleichmäßig erleuchtete Signalscheibe sichergestellt werden. Das Scheinwerfergehäuse 10 weist im übrigen auf der Lichtaustrittseite eine transparente Schutzscheibe 30 auf, die die Lichtverteilung jedoch nicht oder lediglich unwesentlich beeinflusst.

Wenn bei dem erfindungsgemäßen Signal- und Fahrlichtscheinwerfer der Fig. 1 lediglich das Fahrlicht und somit die weiße Hochleistungs-LED 12 eingeschaltet ist, wird in Richtung der Mittelachse 14 lediglich eine geringe Lichtstärke abgegeben, so dass der Scheinwerfer in Richtung der Mittelachse 14 nicht mehr als Signallicht, beispielsweise mit einem geforderten Durchmesser von 170 mm, erkannt wird. Um dies auch im Fahrlichtbetrieb zu gewährleisten, werden auch im Fahrlichtbetrieb die side-emitting-LED 28 und die zweiten LED's 20 eingeschaltet. Zusätzlich können dann, wenn der erfindungsgemäße Scheinwerfer als obere Leuchte an einem Schienenfahrzeug eingesetzt wird, die zweiten LED's 20 und die side-emitting-LED 28 im Fahrlichtbetrieb 28, d.h. zusammen mit der Hochleistungs-LED 12 mehr Licht abgeben, als für die Funktion "Signallicht weiß" an und für sich erforderlich ist. Im reinen Signallichtbetrieb werden die zweiten LED's 20, 28 dann mit der nominalen Lichtstärke betrieben.

In der Darstellung der Fig. 4 zeigt der durchgezogene Kurvenverlauf das Spektrum einer konventionellen weißen Hochleistungs-LED während der gestrichelt dargestellte Verlauf im Bereich zwischen etwa 600 und 700 nm das Spektrum der bei dem Scheinwerfer der Fig. 1 verwendeten Hochleistungs-LED 12 zeigt. Außerhalb des Bereichs zwischen 600 nm und 700 nm verläuft das Spektrum der Hochleistungs-LED 12 deckungsgleich mit der dargestellten durchgezogenen Kurve. Es ist zu erkennen, dass das Spektrum zusätzlich zum normalen Spektrum einer weißen Hochleistungs-LED neben Maxima 32,34 bei etwa 600 nm entsprechend einer Lichtfarbe amber, sowie bei etwa 640 nm, entsprechend einer Lichtfarbe rot, aufweist, wobei diese Nebenmaxima gestrichelt angedeutet sind. Gegenüber konventionellen weißen Leuchtdioden, die lediglich minimale Rot- bzw. Amberanteile im Spektrum aufweisen, kann dadurch die Erkennbarkeit roter und gelber Retroreflexsignale im Fahrlichtbetrieb deutlich verbessert werden.

Dies ist insbesondere im Fahrlichtbetrieb von Bedeutung, da beim Signallichtbetrieb zwar zusätzlich rote, grüne und/oder gelbe LED's eingeschaltet werden können, in Bezug auf das abgegebene Fahrlicht ist dies jedoch nicht wirkungsvoll, da das von der weißen Hochleistungs-LED 12 abgegebene Licht gegenüber der Mittelachse 14 und somit gegenüber einer Achse von roten LED's, die beispielsweise zwischen den weiteren LED's 20 angeordnet sind, geneigt ist. Darüber hinaus ist der Lichtstärkeunterschied zwischen dem von der weißen Hochleistungs-LED 12 abgegebenen Licht und dem von eventuellen roten LED's abgegebene Licht derartig groß, dass von roten LED's kein ausreichender Lichtstrom erzeugt werden könnte. Schließlich könnten rote LED's in axialer Richtung, das bedeutet in Richtung der Mittellängsachse 14, wie eine rote Aura der weißen Hochleistungs-LED 12 wirken und dadurch aus bestimmten Winkeln mit einem Zugschlusssignal verwechselt werden. Erfindungsgemäß wird daher die weiße Hochleistungs-LED 12 so ausgelegt, dass sie nennenswerte Spektralanteile bei 600 nm sowie bei 640 nm aufweist. Dies kann beispielsweise mittels Hochleistungs-LED's erfolgen, die mit mindestens je einem grünen, roten und blauen Chip in einem Gehäuse versehen sind und bei denen der Farbort des jeweils abgegebenen Lichts durch unterschiedliche Ansteuerung der einzelnen Chips nahezu beliebig festgelegt und auch individuell eingestellt werden kann. Um auch im Signallichtbetrieb einen gewünschten Farbort des abgegebenen Lichts zu erzielen, können die zweiten LED's 20 wenigstens einige rote, gelbe und grüne LED's aufweisen. Gleichzeitig können neben der weißen side-emitting-LED 28 zusätzliche grüne, gelbe und/oder rote side-emitting-LED's auf der Innenseite des Reflektors 26 angeordnet werden, um über die gesamte zu erleuchtende Signalscheibe den gewünschten Farbort festzulegen.

## Patentansprüche

1. Kombinierter Signal- und Fahrlichtscheinwerfer für Schienenfahrzeuge, mit einem ersten, als lichtemittierende Diode (12) ausgebildeten Leuchtmittel zum Abstrahlen von Licht mit einer ersten Lichtstärke in eine erste Hauptabstrahlrichtung (18), und wenigstens einem zweiten, als lichtemittierende Diode (20, 28) ausgebildeten Leuchtmittel zum Abstrahlen von Licht in eine zweite Hauptabstrahlrichtung (14), wobei die zweite Lichtstärke geringer ist als die erste Lichtstärke und die zweite Hauptabstrahlrichtung (14) von der ersten Hauptabstrahlrichtung (18) verschieden ist und wobei mit dem wenigstens einen zweiten Leuchtmittel wenigstens ein Abschnitt einer gleichmäßig erleuchteten Signalscheibe erzeugt werden soll, **dadurch gekennzeichnet, dass** wenigstens eines der zweiten Leuchtmittel als sogenannte side-emitting-LED (28) ausgebildet ist, die Licht in einem Winkelbereich von etwa +/- 110° zu einer Mittelachse (29) der side-emitting-LED (28) abgibt, und dass Reflexions- und Streu mittel vorgesehen sind, um das von der side-emitting-LED (28) abgegebene Licht im wesentlichen in die zweite Hauptabstrahlrichtung (14) zu leiten.

2. Scheinwerfer nach Anspruch 1, **dadurch gekennzeichnet, dass** die Reflexions- und Streumittel wenigstens abschnittsweise eine strukturierte Oberfläche zum Erzeugen einer diffusen Reflexion aufweisen.

3. Scheinwerfer nach Anspruch 1 oder Anspruch 2, **dadurch gekennzeichnet, dass** die Reflexions- und Streumittel als parabolartiger Reflektor (26) ausgebildet sind.

4. Scheinwerfer nach wenigstens einem der vorstehenden Ansprüche, **dadurch gekennzeichnet, dass** das erste Leuchtmittel (12) in Abstrahlrichtung vor einer Vorsatzlinse (16) angeordnet ist und die Reflexions- und Streumittel das von der side-emitting-LED (28) abgegebene Licht auf die Vorsatzlinse (16) leiten.

5. Scheinwerfer nach Anspruch 4, **dadurch gekennzeichnet, dass** die side-emitting-LED (28) im Abstand des Brennpunkts zu der Vorsatzlinse (16) oder auf Höhe des Brennpunkts aber seitlich versetzt zum Brennpunkt angeordnet ist.

6. Scheinwerfer nach wenigstens einem der vorstehenden Ansprüche, **dadurch gekennzeichnet, dass** die Vorsatzlinse (16) wenigstens abschnittsweise von weiteren lichtemittierenden Dioden (20) umgeben ist.

7. Scheinwerfer nach wenigstens einem der vorstehenden Ansprüche, **dadurch gekennzeichnet, dass** bei Signallicht- oder Fahrlichtbetrieb mit weißem Licht zusätzlich rotes Licht und/oder grünes Licht emittierende Dioden (20) eingeschaltet sind.

## Claims

1. Combined headlamp and signaling lights for railway vehicles having a first light bulb designed as a light-emitting diode (12) for emission of light with a first light intensity in a first main emission direction (18) and at least one second light bulb designed as a light-emitting diode (20, 28) for emission of light in a second main emission direction (14), where the second light intensity is less than the first light intensity and the second main emission direction (14) differs from the first main emission direction (18) and where at least one section of an evenly illuminated signal disc is to be provided using the at least one second light bulb, **characterized in that** at least one of the second light bulbs is designed as a so-called side-emitting LED (28) that emits light in an angular range of around +/- 110° to a central axis (29) of the side-emitting LED (28), and **in that** reflection and diffusion means are provided in order to direct the light emitted by the side-emitting LED (28) substantially in the second main emission direction (14).

2. Headlamp according to Claim 1, **characterized in that** the reflection and diffusion means have at least in some sections a structured surface for generating a diffuse reflection.

3. Headlamp according to Claim 1 or Claim 2, **characterized in that** the reflection and diffusion means are designed as a parabolic reflector (26).

4. Headlamp according to at least one of the preceding claims, **characterized in that** the first light bulb (12) in the emission direction is arranged in front of a forward-mounted lens (16) and the reflection and diffusion means direct the light emitted by the side-emitting LED (28) onto the forward-mounted lens (16).

5. Headlamp according to Claim 4, **characterized in that** the side-emitting LED (28) is arranged at the distance of the focal point from the forward-mounted lens (16) or at the level of the focal point but laterally offset from the focal point.

6. Headlamp according to at least one of the preceding claims, **characterized in that** the forward-mounted lens (16) is surrounded at least in some sections by further light-emitting diodes (20).

7. Headlamp according to at least one of the preceding claims, **characterized in that** red light and/or green light-emitting diodes (20) are additionally switched on during signal light or headlamp operation with white light.

## Revendications

1. Phare et feu de signalisation combiné pour véhicules ferroviaires, avec une première source lumineuse formée par une diode électroluminescente (12) destinée à émettre de la lumière avec une première intensité lumineuse dans une première direction principale de rayonnement (18), et au moins une deuxième source lumineuse formée par une diode électroluminescente (20, 28) destinée à émettre de la lumière dans une deuxième direction principale de rayonnement (14), sachant que la deuxième intensité lumineuse est plus faible que la première intensité lumineuse et que la deuxième direction principale de rayonnement (14) est différente de la première direction principale de rayonnement (18), et qu'avec au moins une des deuxièmes sources lumineuses doit être créée une section d'un disque de signal éclairant uniformément, **caractérisé en ce qu'**au moins une des deuxièmes sources lumineuses est formée par une DEL à émission latérale (28) qui émet de la lumière sous un angle d'environ +/- 110° par rapport à l'axe médian (29) de la DEL à émission latérale (28), et que sont prévus des éléments réfléchissants et diffusants afin de diriger pour l'essentiel la lumière émise par la DEL à émission latérale (28) dans la deuxième direction principale de rayonnement (14).

2. Phare selon la revendication 1, **caractérisé en ce que** les éléments réfléchissants et diffusants présentent au moins par sections une surface structurée pour générer une réflexion diffuse.

3. Phare selon la revendication 1 ou 2, **caractérisé en ce que** les éléments réfléchissants et diffusants ont la forme d'un réflecteur parabolique (26).

4. Phare selon au moins l'une des revendications précédentes, **caractérisé en ce que** dans la direction de rayonnement, la première source lumineuse (12) est placée devant une lentille additionnelle (16), et que les éléments réfléchissants et diffusants dirigent sur la lentille additionnelle (16) la lumière émise par la DEL à émission latérale (28).

5. Phare selon la revendication 4, **caractérisé en ce que** la DEL à émission latérale (28) est placée à une certaine distance du foyer de la lentille additionnelle (16) ou à la hauteur du foyer mais décalée latéralement par rapport au foyer.

6. Phare selon au moins l'une des revendications précédentes, **caractérisé en ce que** la lentille additionnelle (16) est, au moins par sections, entourée par des diodes électroluminescentes supplémentaires (20).

7. Phare selon au moins l'une des revendications précédentes, **caractérisé en ce que** lors du fonctionnement en tant que phare ou feu de signalisation avec une lumière blanche, des diodes électroluminescentes (20) émettant de la lumière rouge et/ou verte sont en outre allumées.
